# EUROPEAN PATENT APPLICATION

(11) **EP 4 266 062 A1**
(43) Date of publication of application: **25.10.2023**
(21) Application number: 21854820.4
(22) Date of filing: 19.12.2021
(51) Int. Cl.: G01Q 70/10, G01Q 70/14

(54) **CANTILEVER WITH A SILICON TIP**

(30) Priority: 20.12.2020 RU 2020142162
(71) Applicant: Scansens GmbH, 21079 Hamburg (DE)
(72) Inventor: RABUKHIN, Anton Leonidovich, Moscow, 124617 (RU); SHUBIN, Andrey Borisovich, Moscow, 119261 (RU)
(74) Representative: Koudine, Andreï
(86) International application number: PCT/IB2021/061991
(87) International publication number: WO 2022/130353

(57) **Abstract**

The invention relates to a cantilever with a silicon needle, which comprises a base (1) with a single-crystal silicon console (2) mounted thereon and provided with a silicon needle (3), consisting of a pointed working part (4) and a pedestal (5). Said pedestal (5) have a length-to-transverse size ratio of at least two and no more than sixty. The pedestal (5) is arranged on a single-crystal silicon console plane.

According to the invention, the single-crystal silicon console (2), the pedestal (5), and the pointed working part (4) are all made of a single block of single-crystal silicon.

## Description

The invention relates to a nanotechnology and a scanning probe microscopy, and, more specifically, to cantilevers that make it possible, as part of a probe microscope, to obtain information about the topography of a sample and other physical characteristics of its surface, such as, for example, conductivity, stiffness, and chemical composition.

It is known a cantilever comprising a single-crystal silicon console, formed by diffusing an impurity into a silicon plate followed by selective etching, a silicon needle disposed on the single-crystal silicon console and formed by anisotropic etching of the silicon plate having crystallographic orientation indices of <100> [RU2121657].

A disadvantage of this arrangement is that the silicon needle formed by anisotropic etching of the silicon plate having crystallographic orientation indices of <100> will represent a conical shape along the entire length thereof, including its apex, said apex having an angle of 20 to 40 deg. Such shape of the device does not allow for analyzing surfaces having profiles with vertical walls or profiles with large (high-aspect) height differences. Moreover, at the most typical needle height values ranging from 7 to 18 µm, such cone-shaped silicon needle will have a base diameter comparable to the height value divided by two. Such value of the base diameter is typically greater than the typical cantilever thickness, which is (or comprised) within the range of 1-3 µm. Since in the referenced patent, the cantilever is formed by diffusion of the impurity followed by selective etching, the resulting console will comprise a pit located under the base of the needle. Such pit will lead to distortions when using an optical method to generate a signal from the console.

It is also known a cantilever comprising a base with a single-crystal silicon cantilever mounted thereon and provided with a pedestal, on which a needle in the form of an epitaxially grown whisker is located. The most important property of such cantilever is that the whisker has a high characteristic length-to-diameter ratio, making it possible to use such cantilever for scanning a surface comprising a topology with high-aspect height differences [RU2275591].

A disadvantage of this device is that initially, the needle of such device is a whisker, which is expected to be obtained in the process of epitaxial growth on the top of an already existing silicon pedestal. The epitaxial growth of the whiskers is a poorly controlled process, during which it is extremely difficult to obtain a strictly specified height of the whisker. The latter also complicates establishing the geometric characteristics of the whisker without additional measurements which in turn makes it difficult to mass produce cantilevers with prescribed geometric characteristics.

In addition, the process of the epitaxial growth used to obtain a whisker with prescribed curvature radius of the apex is also poorly controlled, which in practice requires a final measurement of the already formed whisker. This disadvantage also results in an inability to predict the resolution of such cantilever, as well as inability to obtain precise values when interpreting the results of scanning of the examined surface. Therefore, the disadvantage also consists in the difficulty of organizing a mass production of such cantilevers having a prescribed curvature radius of the whisker apex, since such production will require a piece-by-piece measurement of already produced cantilevers.

In addition, a dimensional effect resulting from a decreased whisker diameter causes the dislocations in the bulk of the whisker to practically disappear, which increases the strength by hundreds of times compared to massive (conventional) single crystals. The absence of dislocations also results in reduced thermal and electrical conductivities, which in turn limits the application of such cantilevers in certain procedures requiring high electrical conductivity of the whisker and specific volt-ampere characteristics during interaction between the whisker and the analyzed surface.

Since a whisker is a form of the thread-like crystals, doping them to achieve specific conductivity values is extremely difficult due to the gettering effect, which results in localizing doping additives that create dislocations in the bulk of the thread-like crystals on the surface thereof.

In addition, since both the console and the pedestal of this cantilever are made of single-crystal silicon, which is a semiconductor, the epitaxial growth of whiskers may result in the unpredictable formation of the barrier effects and p-n transitions in the locations of the epitaxial whisker growth on the pedestal, causing unpredictable characteristics. The latter may, in turn, unpredictably affect the scanning results when applying the scanning probe microscope (SPM) procedures, utilizing the electrical properties of the cantilever.

In addition, the fact that the whisker growth occurs on a silicon pedestal, having a significantly greater diameter compared to that of the whisker itself, means that a significant mass in the form of a pedestal is actually localized at the tip of the cantilever console, which in turn means that the oscillation mechanics of the cantilever will be dependent on this mass. Since in today's probe microscopes, the optical method of generating a measuring signal based on the laser beam reflection from the console is the most common, the use of a cantilever with a localized mass at the tip of the console will result in a non-linear distortion of such measuring signal.

In addition, when scanning the surface, a bending of the console exerts pressure onto the analyzed surface through the needle, causing a certain slippage of the latter when scanning the inclined areas of the analyzed surface. Since in this case, the needle acts as a mechanical lever, such slippage causes torsion of the console. This, in turn, causes distortions of the optically generated signal. The smaller the height of the needle, the shorter the mechanical lever, which causes console torsion, and the less significant the distortion. Since the whisker is growing on the pedestal having a certain height, such whisker is actually raised by the height of the pedestal relative to the console, which adds to the length to the lever and enhances the torsion effect of the console.

In addition, whenever a cantilever is used in the procedures requiring high temperature conditions, mechanical stresses will be generated at the point of whisker attachment to the pedestal due to the difference in the pedestal and whisker materials. This, in turn, may lead to the breakage of the point of whisker attachment to the pedestal, which causes the actual breakage of the cantilever. This effect reduces the reliability of the device.

In today's probe microscopy, in addition to obtaining the shape of the surface topology, it is also important to produce an accurate quantitative estimate of the dimensions of the surface topology elements, as well as other characteristics, such as conductivity, viscosity, force curves during needle interaction with the surface, distribution of the surface potential, capacitance measurement in the surface points, distribution of friction forces on the surface, etc. Therefore, the use of this cantilever in the metrological SPM procedures is complicated.

The above-referenced device is selected as a prototype of the proposed solution.

The technical result of the invention consists in that a cantilever with a silicon needle, characterized by a high aspect length-to-transverse size ratio of the needle, which comprises a single-crystal silicon console, a pedestal, and a pointed working part, all made of a single block of single-crystal silicon with a priori known geometric dimensions, as well as electrical, mechanical, and thermal properties, provides a higher resolution when scanning an analyzed surface, as well as higher accuracy of measured physical characteristics of the objects of the analyzed surface.

The above technical result is achieved by using a cantilever with a silicon needle, which comprises a base with a single-crystal silicon console mounted thereon and provided with a silicon needle, consisting of a pointed working part and a pedestal, having a length-to-transverse size ratio of at least two and no more than sixty, which is arranged on a single-crystal silicon console plane, wherein said single-crystal silicon console, the pedestal, and the pointed working part are all made of a single block of single-crystal silicon, which also represents the substance of the invention.

There is an embodiment of the invention, in which the single-crystal silicon console, the pedestal, and the pointed working part all have same doping levels.

There is also an embodiment in which the single-crystal silicon console has a different doping level compared to the pedestal and the pointed working part.

There is yet another embodiment in which the single-crystal silicon console and the pedestal have a different doping level compared to the pointed working part.

There is yet another embodiment in which the single-crystal silicon console, the pedestal, and the pointed working part have different levels of doping.

There is yet another embodiment in which the single-crystal silicon console, the pedestal, and the pointed working part form a p-n junction in the areas with different doping levels.

There is yet another embodiment in which the pedestal is made with a periodic corrugated side surface.

There is yet another embodiment in which the periodic corrugated pedestal surface consists of cone-shaped members.

There is yet another embodiment in which an angle A between the pedestal and a plane of the single-crystal silicon console is not equal to 90°.

There is yet another embodiment in which the single-crystal silicon console has a protrusion-compensator at a point of its connection to the base.

There is also an embodiment in which the pedestal has a circular shape in a cross-section parallel to the plane of the single-crystal silicon console.

There is yet another embodiment in which the pedestal has a polyhedral shape in the cross-section parallel to the plane of the single-crystal silicon console.

There is yet another embodiment in which a cross-section B1-B2 of the pedestal, which is parallel to the plane of the single-crystal silicon console, has an area equal to the area of the cross-section B1-B2 of the base of the pointed working part in the zone where said cross-section is connected to the pointed working part of the silicon needle.

There is yet another embodiment in which a cross-section C1-C2 of the pedestal, which is parallel to the plane of the single-crystal silicon console, has a larger area in the zone of its connection to the pointed working part of the silicon needle compared to the area of a cross-section D1-D2 of the pointed working part in the zone of its connection to the pedestal.

There is yet another embodiment in which a cross-section E1-E2 of the pedestal, which is parallel to the plane of the single-crystal silicon console, has a smaller area in the zone of its connection to the pointed working part of the silicon needle compared to the area of a cross-section F1-F2 of the pointed working part in the widest section thereof.

There is yet another embodiment in which the silicon needle is coated with a plasmonic active coating.

There is yet another embodiment in which the single-crystal silicon console and the silicon needle are coated with a conductive coating.

There is yet another embodiment in which the single-crystal silicon console and the silicon needle are coated with a magnetically sensitive coating.

There is yet another embodiment in which the pedestal, in the cross-section parallel to the plane of the single-crystal silicon console, has a tetrahedral shape with its faces oriented at angles K1 and K2 relative to the opposite ends of the single-crystal silicon console.

There is yet another embodiment in which the pedestal, in the cross-section parallel to the plane of the single-crystal silicon console, has an octahedral shape with its faces oriented at angles K3 and K4 relative to the opposite ends of the single-crystal silicon console.

There is yet another embodiment in which the pedestal is made of at least a first member and a second member, having different areas of the cross-sections parallel to the plane of the single-crystal silicon console.

Other features and advantages of the invention are obvious from the description provided below for illustration purposes and without limitations with the references to the accompanying drawings, in which:
- Figure 1 is a schematic side view of the cantilever;
- Figure 2 is a schematic view of the cantilever, in which the single-crystal silicon console has a different doping level compared to the pedestal and the pointed working part;
- Figure 3 is a schematic view of the cantilever, in which the single-crystal silicon console, the pedestal, and the pointed working part all have different doping levels;
- Figure 4 is a schematic view of the cantilever, in which the single-crystal silicon console, the pedestal and the pointed working part form a p-n junction in the areas with different doping levels;
- Figure 5 is a schematic view of the cantilever, in which the pedestal has a periodic corrugated side surface;
- Figure 6 is a schematic view of the cantilever, in which the periodic corrugated surface of the pedestal consists of cone-shaped members;
- Figure 7 is a schematic view of the cantilever, in which angle A between the pedestal and the plane of the single-crystal silicon console is not equal to 90°;
- Figure 8 is a schematic view of the cantilever, in which the single-crystal silicon console has a protrusion-compensator at a point of its connection to the base;
- Figure 9 is a schematic view of the cantilever, in which the pedestal has a circular shape in the cross-section parallel to the plane of a single-crystal silicon console;
- Figure 10 is a schematic view of the cantilever, in which the area of the pedestal cross-section parallel to the plane of the single-crystal silicon console is equal to the cross-sectional area of the base of the pointed working part in the zone of pedestal connection to the pointed working part of the silicon needle;
- Figure 11 is a schematic view of the cantilever, in which the area of the pedestal cross-section C1-C2 parallel to the plane of the single-crystal silicon console, in the zone of pedestal connection to the pointed working part of the silicon needle, is greater than the area of a cross-section D1-D2 of the pointed working part in the zone of its connection to the pedestal;
- Figure 12 is a schematic view of the cantilever, in which the area of the pedestal cross-section E1-E2 parallel to the plane of the single-crystal silicon console, in the zone of pedestal connection to the pointed working part of the silicon needle, is smaller than the area of cross-section F1-F2 of the pointed working part in the widest section thereof;
- Figure 13 is a schematic view of the cantilever, in which the silicon needle is coated with a plasmonic active coating;
- Figure 14 is a schematic view of the cantilever, in which the single-crystal silicon console and silicon needle are coated with a conductive coating;
- Figure 15 is a schematic view of the cantilever, in which the single-crystal silicon console and silicon needle are coated with a magnetic sensitive coating;
- Figure 16 is a schematic view of the cantilever, in which the pedestal in the section parallel to the plane of the single-crystal silicon console has a tetrahedral shape with its faces oriented at angles K1 and K2 relative to the opposite ends of the single-crystal silicon console;
- Figure 17 is a schematic view of the cantilever, in which the pedestal in the section parallel to the plane of the single-crystal silicon console has an octahedral shape with its faces oriented at angles K3 and K4 relative to the opposite ends of the single-crystal silicon console;
- Figure 18 is a schematic view of the cantilever, in which the pedestal is made of at least a first member and a second member having different areas of the cross-sections parallel to the plane of the single-crystal silicon console.
- Figure 19 is an SEM photograph (i.e., a photograph obtained using a scanning electron microscope) of the cantilever with a silicon needle (base is not shown).

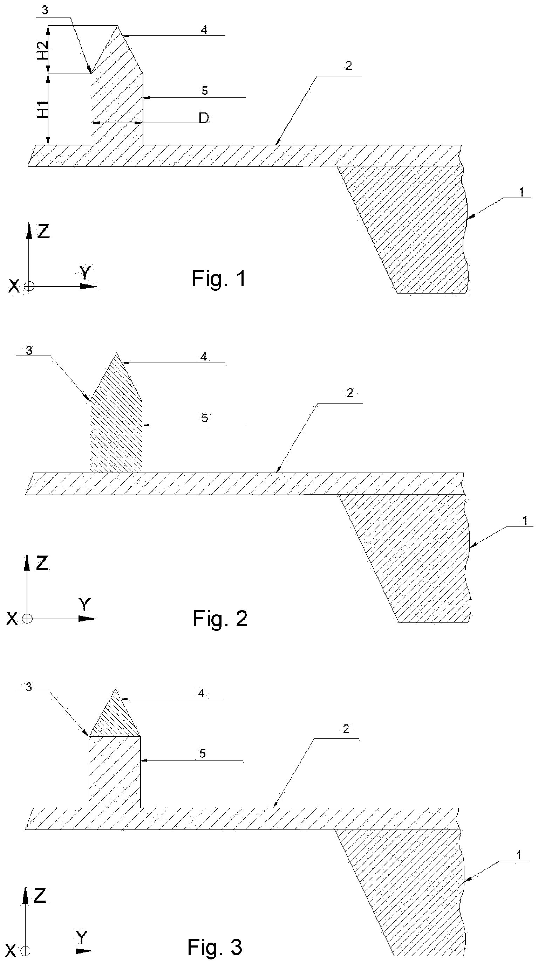

As described above and illustrated in Figures 1 to 19, the invention relates to a cantilever with a silicon needle. Such cantilever comprises a base 1 (Fig. 1), with a single-crystal silicon console 2 mounted thereon. Single-crystal silicon may be used as the base 1. The single-crystal silicon console 2 may have the following dimensions: length - at least 5 µm and no more than 500 µm, width - at least 2 µm and no more than 100 µm, thickness - from 0,2µm to 10 µm. A silicon needle 3, which consist in a pointed working part 4 and a pedestal 5 arranged on the plane of the single-crystal silicon console 2, is mounted on the single-crystal silicon console 2 opposite to its connection to the base 1. Moreover, the pedestal 5 has a length H1 -to-transverse size D ratio in plane XY of at least two and no more than sixty. Furthermore, the pedestal 5 is arranged on a plane of the single-crystal silicon console 2.

According to the invention, the single-crystal silicon console 2, the pedestal 5, and the pointed working part 4 are all made of a single block of single-crystal silicon.

The height H1 of the pedestal 5 may range from 2 µm to 60 µm. The height H2 of the pointed working part 4 may range from 300 nm to 5000 nm.

There is an embodiment in which the single-crystal silicon console 2, the pedestal 5, and the pointed working part 4 all have same doping levels, which can be (i.e., comprised) within a range from 1 *10E13 cm⁻³ to a maximum solubility of the doping additive.

There is another embodiment in which the single-crystal silicon console 2 (Fig. 2) has a different doping level compared to the pedestal 5 and the pointed working part 4. The difference can be at least 10 percent. In this case, the doping levels may range from 1*10E13 cm⁻³ to a maximum solubility of the doping additive.

There is yet another embodiment in which the single-crystal silicon console 2 (Fig. 3) and the pedestal 5 have different doping levels compared to the pointed working part 4. The difference can be at least 10 percent. In this case, the doping levels may range from 1*10E13 cm⁻³ to a maximum solubility of the doping additive.

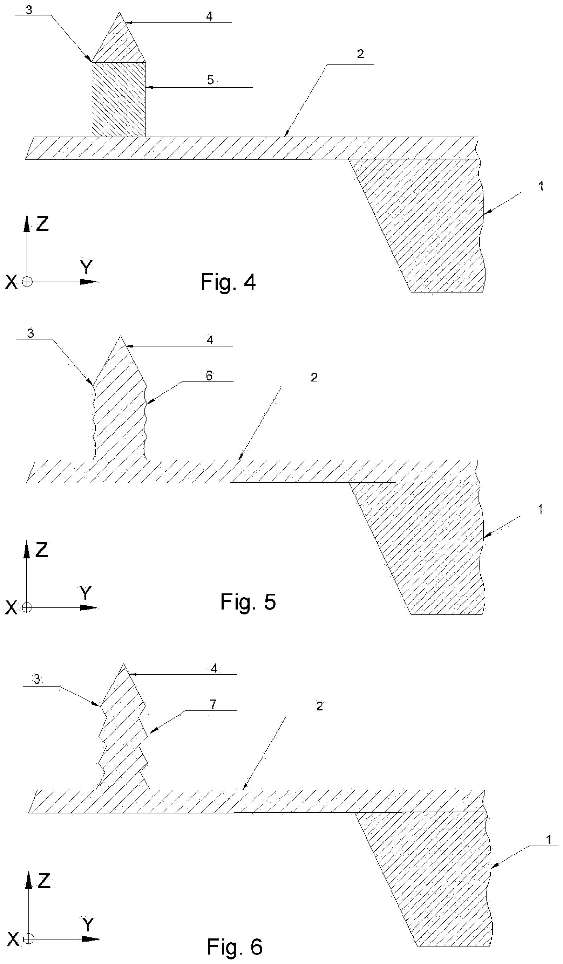

There is yet another embodiment in which the single-crystal silicon console 2 (Fig. 4), the pedestal 5, and pointed working part 4 all have different levels of doping. The difference can be at least 10 percent. In this case, the doping levels may range from 1*10E13 cm⁻³ to the maximum solubility of the doping additive. There is yet another embodiment, in which the single-crystal silicon console 2, the pedestal 5, and the pointed working part 4 form a p-n junction in the areas with different doping levels.

There is yet another embodiment in which the pedestal 5 (Fig. 5) is provided with a periodic corrugated side surface 6. A period of the corrugated side surface 6 may range from 0,1 µm to 3 µm. A height of the periodic corrugated side surface 6 may range from 50 nm to 500 nm.

There is yet another embodiment in which the periodic corrugated surface 6 (Fig. 6) of the pedestal 5 consists of cone-shaped members 7. The cone-shaped members may have following dimensions: cone diameter in its largest section - from 0,5 µm to 8 µm, cone diameter in its smallest section - from 0,1 µm to 6 µm.

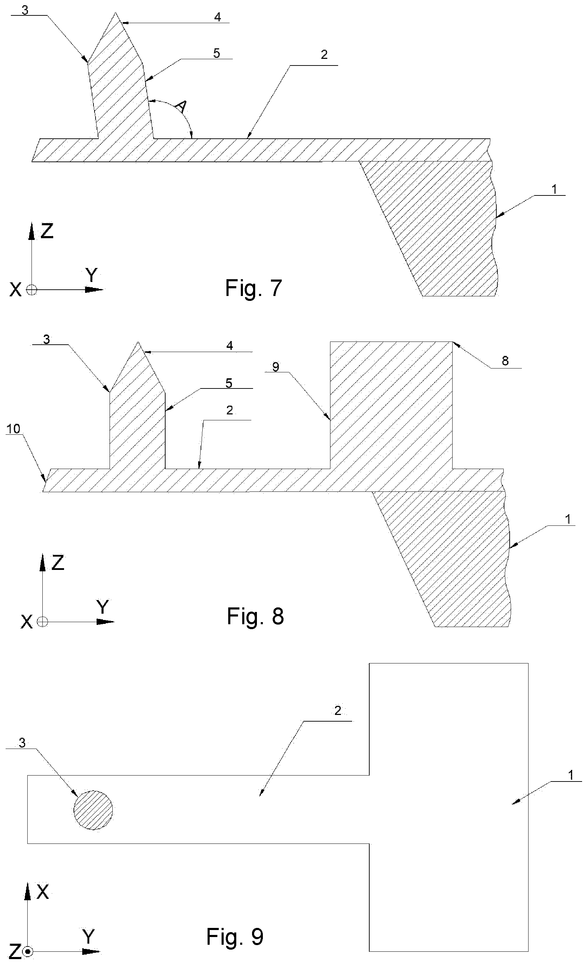

There is yet another embodiment in which angle A between the pedestal 5 (Fig. 7) and a plane of the single-crystal silicon console 2 is not equal to 90° (i.e., different from 90°). In this case, said angle can be (i.e., comprised) within a range from 45° to 89,9°.

There is yet another embodiment in which the single-crystal silicon console 2 (Fig. 8), at the point of its connection to the base 1, has a protrusion-compensator 8, which may have following dimensions. A minimum length along the Y-coordinate is 10 µm, a maximum length can be made up of the sum of a length of the base 1 and a length of those parts of the protrusion-compensator 8 that protrude beyond the base 1. Thus, at a typical length of the base 1 equal to 3600 µm and a maximum value of the protrusion of the protrusion-compensator beyond the base 1 equal to 100 µm, the total length of the protrusion-compensator will be 3800 µm. A height of the protrusion-compensator 8 along the Z-coordinate can be from 2 µm to 60 µm. The X-coordinate width can be from 2 µm to 50 µm. In this case, a surface 9 of the protrusion-compensator 8 can be shifted leftward by, for example, up to 150µm relative to the base 1 along the Y-coordinate, as shown in Fig. 8, or coincide therewith (not shown). An end 10 of the single-crystal silicon console 2 may protrude along the Y-coordinate leftward from the pedestal 5 by, for example, up to 20 µm, as shown in Fig. 8, or coincide with the edge thereof (not shown).

There is yet another embodiment in which the pedestal 5 (Fig. 9), in a cross-section parallel to the plane of the single-crystal silicon console, has a shape of a circle, the diameter of which can be (i.e., comprised) in the range from 0,1 µm to 7 µm.

There is yet another embodiment in which the pedestal 5, in the cross-section parallel to the plane of the single-crystal silicon console, has a polyhedral shape (conditionally not shown). This polyhedral shape may be formed by crystallographic planes of single-crystal silicon, formed by anisotropic liquid etching, and may have, for example, tetrahedral or octahedral shapes. It may also have an arbitrary number of faces not located in the crystallographic planes, formed by anisotropic liquid etching or formed by plasma-chemical etching, with said number of faces having no anisotropy with respect to crystallographic planes of single-crystal silicon.

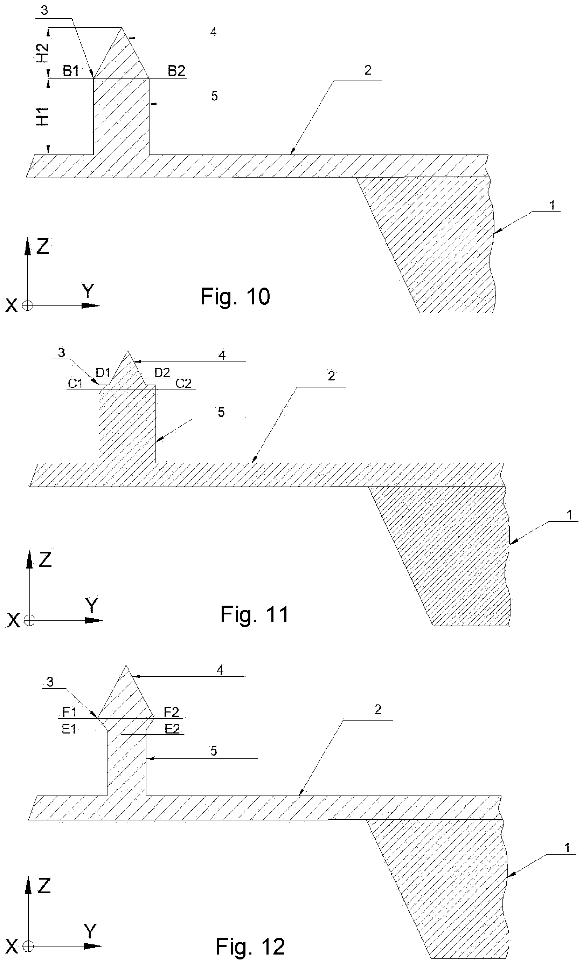

There is yet another embodiment in which an area of cross-section B1-B2 of the pedestal 5 (Fig. 10) parallel to the plane of the single-crystal silicon console 2 is equal to the area of cross-section B1-B2 of the pointed working part 4 in the zone of the pedestal connection to said pointed working part 4 of the silicon needle 3. In this case, the area of this cross-section can be within the range from 0,02 µm² to 40 µm². The most optimal values of the area of cross-section B1-B2 at the height H1 of the pedestal 5 and the height H2 of the pointed working part 4 may be in following ranges. With the height H1 of at least 5 µm and no more than 18 µm, and the height H2 of at least 0,3µm and no more than 5 µm, the value of the area of cross-section B1-B2 can be (i.e., comprised) within the range from 0,03 µm² to 7 µm².

There is yet another embodiment in which an area of cross-section C1-C2 of the pedestal 5 (Fig. 11) parallel to the plane of the single-crystal silicon console 2, in the zone of the pedestal connection to the pointed working part 4 of the silicon needle 3, is greater compared to an area of cross-section D1-D2 of the pointed working part 4 in the zone of its connection to the pedestal 5. The connection zone means a zone measuring up to 1 µm in height along the Z-coordinate, within which the pedestal 5 transitions into the pointed working part 4. The above-referenced cross-sections C1-C2 and D1-D2 are conditionally shown not to scale to provide a better view.

There is yet another embodiment, in which an area of cross-section E1 - E2 of the pedestal 5 (Fig. 12) parallel to the plane of the single-crystal silicon console 2, in the zone of the pedestal connection to the pointed working part 4 of the silicon needle 3, is smaller compared to an area of cross-section F1-F2 of the pointed working part 4 in the widest section thereof. The area of cross-section F1-F2 may be within a range from 0,2 µm² to 12 µm². The area of cross-section E1-E2 can be (i.e., comprised) within a range from 0,03 µm² to 10 µm².

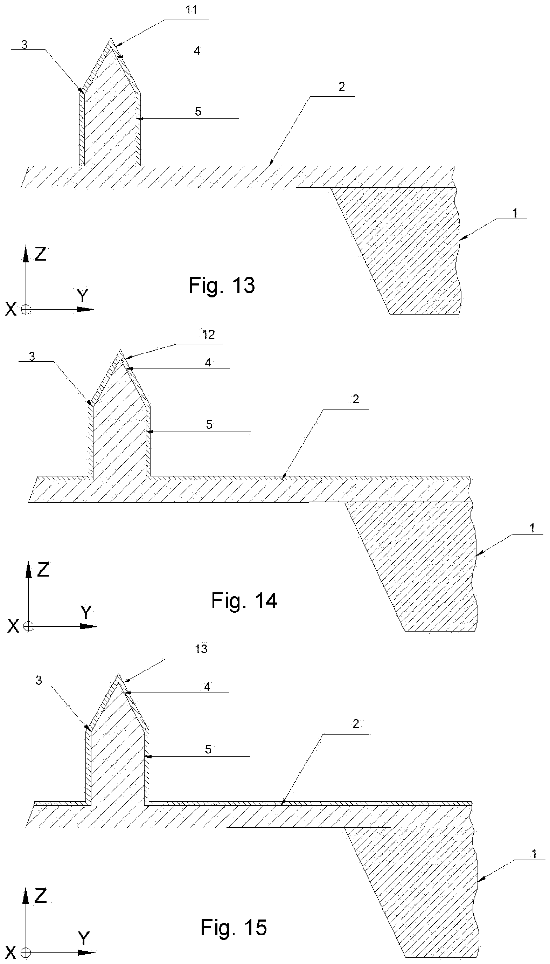

There is yet another embodiment in which the silicon needle 3 (Fig. 13) is coated with a plasmonic active coating 11. This coating can be made of metal nitrides exhibiting plasmonic activity. For example, the coating can be made of titanium nitride, zirconium nitride, hafnium nitride, or a combination thereof, or made of metals exhibiting plasmonic activity, such as gold, silver, or combinations thereof, and have a thickness from 20 nm to 500 nm.

There is yet another embodiment in which the single-crystal silicon console 2 (Fig. 14) and the silicon needle 3 are coated with a conductive coating 12. This coating can be made of chemically inert metals, such as platinum and gold, or made of conductive metal carbides, such as tungsten carbide, or made of conductive metal nitrides, such as titanium nitride, or made of metal silicides, such as platinum silicide, and have a thickness from 20 nm to 500 nm.

There is yet another embodiment in which the single-crystal silicon console 2 (Fig. 15) and silicon needle 3 are coated with a magnetic sensitive coating 13. This coating can be made of a combination of materials comprising magnetically sensitive films, such as cobalt, nickel, chromium, platinum, and iron, and have a thickness from 20 nm to 500 nm.

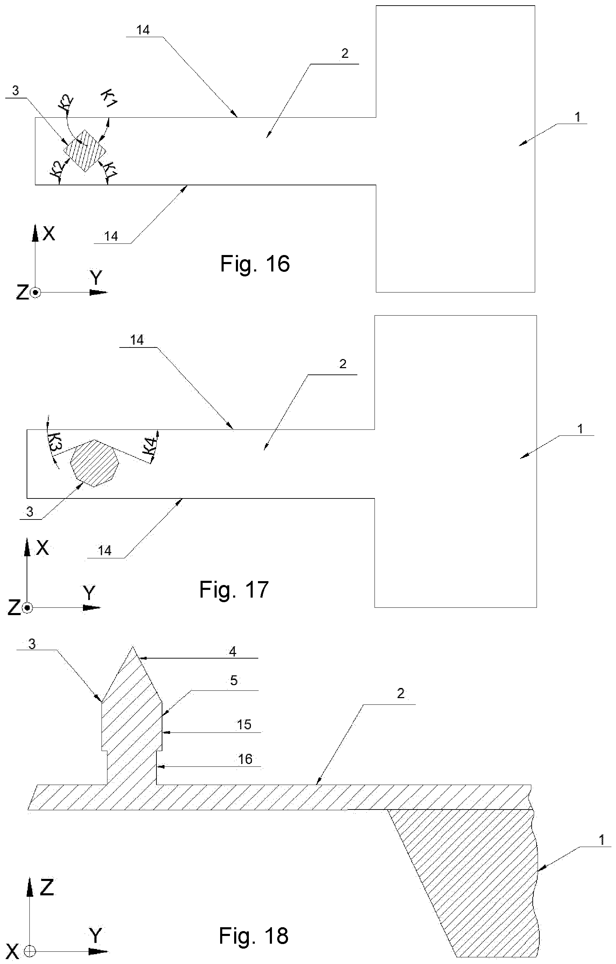

There is yet another embodiment in which the pedestal 5 (Fig. 16), in the cross-section parallel to the plane of the single-crystal silicon console 2, has a tetrahedral shape with the faces oriented at angles K1 and K2 relative to opposite ends 14 of the single-crystal silicon console 2. Angles K1 and K2 may range from 0° to 60°.

There is yet another embodiment in which the pedestal 5 (Fig. 17), in the cross-section parallel to the plane of the single-crystal silicon console 2, has an octahedral shape with the faces oriented at angles K3 and K4 relative to the opposite ends 14 of the single-crystal silicon console 2. Angles K1 and K2 may range from 0° to 45°.

There is yet another embodiment in which the pedestal 5 (Fig. 18) is made of at least a first member 15 and a second member 16 having different areas of the cross-sections parallel to the plane of the single-crystal silicon console 2. The values of these areas may differ by at least 5%. The number of members having different cross-sectional area may range from 2 to 30.

The cantilever with the silicon needle according to the invention can be manufactured based on standard processes used in the microelectronic industry according to the following route.

An oxide layer is created by thermal oxidation on a silicon wafer (hereinafter referred to as a substrate) having a crystallographic orientation characterized by indices <100> and initially doped with acceptor type impurities, such as boron. Next, a polymer mask is formed on the upper side of the substrate by photolithographic methods to facilitate the initial etching of the silicon needle 3. Next, the oxide layer undergoes liquid etching based on the formed polymer mask, resulting in the formation of an oxide mask mimicking the shape of the polymer mask. The polymer mask is then removed. Next, the pointed working part 4 is formed by etching silicon using the oxide mask in a liquid anisotropic etching solution (e.g., a supersaturated potassium hydroxide solution) at a temperature of 90°C. The etching continues until a depth equal to the height H2 of the pointed working part 4 is reached (Fig. 1). Due to the properties of the liquid anisotropic etching solution, the etching rates in the direction of the crystallographic planes that are different from the <111> plane have certain differences, although overall they are quite similar. Based on such differences and considering the fact that silicon has a cubic face-centered crystalline lattice of the diamond type, the formation of the pointed working part 4 occurs from under the oxide mask by creating planes, which form a faceted cone, the number of faces of which as well as the inclination angle relative to the plane, parallel to that of the substrate, are in turn determined by the temperature and composition of the etching solution, and the initial shape of the oxide mask. For example, as a result of etching in a supersaturated sodium hydroxide solution at 90°C, a tetrahedral shape of the cone will be formed from under a round-shaped oxide mask with the inclination angles of the face planes varying from 10°C to 23°C relative to the plane parallel to that of the substrate. At lower concentrations of the etching solution, a cone having eight faces will be formed with the inclination angles of the face planes varying from 12° to 30° relative to the plane parallel to that of the substrate. Accordingly, the use of a triangular oxide mask with at least one side of the triangle oriented parallel to the <100> crystallographic plane will result in a cone having three faces with the inclination angles of the face planes varying from 5° to 23° relative to the plane parallel to that of the substrate. Thus, at this stage of the process route, the pointed working part 4 is formed. Next, the pedestal 5 is formed by performing further plasma-chemical etching of silicon with a vertical etching profile using the previously formed oxide mask, based on which the pointed working part 4 was previously formed. This could be a BOSCH process or a reactive ion etching performed under the conditions of high selectivity of silicon etching with respect to the silica mask. If the substrate subject to etching is located perpendicular to the direction of flow of the chemically reactive ions, the formed etching profiles will have vertical walls, thereby the pedestal will also be formed perpendicularly to the substrate. If the substrate subject to etching is oriented at angle A relative to the direction of flow of the chemically reactive ions, the walls of the formed etching profiles will also have a slope characterized by the same angle A, thereby forming a pedestal oriented at the angle A with respect to the substrate. Etching is performed to obtain a depth equal to height H1 of the pedestal 5. The pedestal 5, obtained at this intermediate process step, will have a shape repeating that of an oxide mask in the cross-section parallel to the plane of the substrate. Next, the pedestal 5 is thinned, and the pointed working part 4 is further etched. The thinning is performed in a liquid anisotropic etching solution, such as a supersaturated sodium hydroxide solution, at a temperature of 90°C. Due to the fact that the pedestal 5, which was pre-formed by vertical plasma-chemical etching, does not comprise <111> planes, etching in the liquid anisotropic etching solution will preserve the vertical structure of the pedestal 5. Thinning is performed until the required value of the area of the pedestal 5 cross-section, parallel to the plane of the substrate, is reached. Thus, the silicon needle 3 is formed. Next, the console is formed by thermal diffusion of phosphorus, resulting in the creation of a p-n junction located at a depth, which is twice the required thickness of the single-crystal silicon console 2. The degree of phosphorus doping is 10¹⁵-10¹⁶ cm⁻³. Next, a layer of silicon oxide is formed on the upper side of the substrate by thermal oxidation. This oxide layer is used to form a polymer mask on the front side by a photolithography technique in order to create a silicon oxide protective mask for the single-crystal silicon console 2 and silicon needle 3. Concurrently, a local mask is formed on the bottom side of the substrate for anisotropic etching of silicon, which results in the formation of the base 1, followed by thermal deposition of aluminum to the upper side of the wafer to create an ohmic connection to n-silicon. Next, electrochemical etch-stop of silicon is performed on the bottom side of the wafer. The etching stops automatically upon reaching the n-layer. This results in the formation of a silicon membrane having a specified thickness (double thickness of the console). The cantilever console is formed by anisotropic etching of the silicon membrane on both sides of the wafer, followed by the removal of metals and two-layer protective mask from the cantilever needle and consoles.

In practice, the most commonly used dimensions of the cantilever base 1 for a scanning probe microscope are 1600 µm along the X-coordinate and 3200 µm along the Y-coordinate. In this case, the thickness of the single-crystal silicon console 2 may vary from 0,3 µm to 10 µm (Z-coordinate value), width may vary from 2 µm to 100 µm (X-coordinate value), and length may vary from 5 µm to 500 µm (Y-coordinate value).

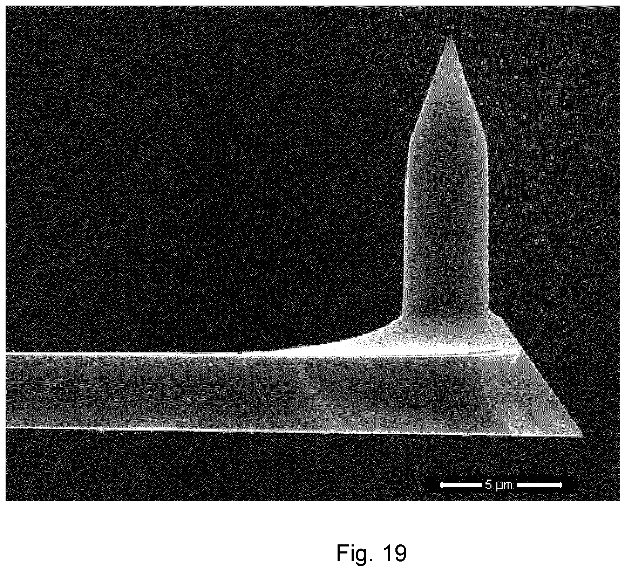

The SEM photograph of the single-crystal silicon console and silicon needle according to the invention is shown in Fig. 19. The scale division value in the lower right corner of Fig. 19 is 5 µm, the thickness of the single-crystal silicon console is 3 µm, the height of the silicon needle is 14 µm, and the thickness thereof is 3,3 µm. This image shown in Fig. 19 illustrates a practical implementation of the cantilever with a silicon needle.

The cantilever with the silicon needle operates as follows. When scanning the analyzed surface of the sample, the single-crystal silicon console 2 is excited at its intrinsic resonance frequency and oscillates along the Z-coordinate. Next, a scanning probe microscope or SPM (not shown) is used to scan the analyzed surface with the cantilever by bringing the needle 3 in contact with the analyzed surface in a controlled manner. As a result of interaction between the needle 3 and the analyzed surface, the oscillation parameters of the single-crystal silicon console 2 (e.g., frequency, amplitude, and phase) change. The above change in these parameters is measured by the scanning probe microscope. For this purpose, the oscillation frequency of the single-crystal silicon console 2 is isolated from the measuring signal, and changes in oscillation parameters are determined. For example, in case of the optical readout of the signal, the output signal is supplied to the SPM from a photodiode. Such output signal comprises information about the frequency of oscillation, its deviation, and phase change. The signal is then transmitted to a computer, which performs visualization of the analyzed surface and simulates the physical characteristics thereof. Detailed description of the SPM operation and measurement procedures can be found in the following sources [1. V.L. Mironov, "Fundamentals of Scanning Probe Microscopy," Institute of Physics of Microstructures, Russian Academy of Sciences (2004). 2. US Patent No. 4,724,318. 3. Nanotechnology, 12, 485 (2001). 4. Appl. Phys. Lett. 58, 2921 (1991). 5. P. Grutter, H.J. Mamin, D. Rugar, in: Scanning Tunneling Microscopy II, edited by R. Wiesendanger and H.-J. Guntherodt (Springer, Berlin, 1992), pp. 151-207. 6. C. Lee et al., "Tip-Enhanced Raman Scattering Imaging of Two-Dimensional Tungsten Disulfide with Optimized Tip Fabrication Process," Sci. Rep., Vol. 7, No. September 2016, p. 40810, Jan. 2017. doi:10.1038/srep40810].

In the cantilever with a silicon needle, comprising a base 1 with a single-crystal silicon console 2 mounted thereon and a silicon needle 3 consisting of a pointed working part 4 and a pedestal 5, said pedestal having a length-to-transverse size ratio of at least two and no more than sixty while being located on a plane of the single-crystal silicon console 2, the fact that said single-crystal silicon console 2, the pedestal 5, and the pointed working part 4 are all made of a single block of single-crystal silicon provides higher resolution when scanning the analyzed surface, as well as higher accuracy when measuring physical characteristics of the objects of the analyzed surface.

In this case, it is possible to introduce doping additives to the single-crystal silicon console 2 and the silicon needle 3 by thermal diffusion or ion implantation methods. Such doping additives make it possible to achieve specific conductivity of these components with high accuracy. This ensures unambiguity of the values of the electric characteristics of the cantilever components, which provides higher accuracy when measuring physical characteristics of the objects of the analyzed surface.

In addition, due to a homogeneous design of the single-crystal silicon console, the pedestal, and the pointed working part, any possibility of the formation of the barrier effects inside the cantilever structure (not provided for by the technology) is completely eliminated. Since the proposed cantilever is produced based on the standard mass-production and well-refined high-precision processes utilized in the microelectronic industry, the production accuracy of the component of the cantilever with a silicon needle will be determined by the accuracy of the technological processes. This makes it possible to assert the high uniformity of geometric dimensions and electrical characteristics during mass-production. This also provides higher resolution when scanning the analyzed surface, as well as higher accuracy when measuring physical characteristics of the objects of the analyzed surface.

In addition, due to the fact that the needle 3 according to the invention has a high aspect (length-to-transverse size) ratio, such needle will always have a lower mass compared to a similar height-wise needle having a conical shape along its entire length, including the apex. In the proposed embodiment, there are no significant masses localized at the tip of the single-crystal silicon console 2. This, in turn, suggests that the oscillations of the single-crystal silicon console 2 will be close to harmonic oscillation. This, in turn, provides greater linearity during optical signal formation in the SPM, which provides higher resolution when scanning the analyzed surface, as well as higher accuracy when measuring physical characteristics of the objects of the analyzed surface.

In addition, since the single-crystal silicon console 2, the pedestal 5, and the pointed working part 4 are all made of the single block of single-crystal silicon, the coefficients of thermal expansion of the single-crystal silicon console 2, the pedestal 5, and the pointed working part 4 will also be the same. When using the cantilever with a silicon needle in high-temperature measurement procedures, the above fact makes the device mechanically more stable. This provides higher resolution when scanning the analyzed surface, as well as higher accuracy when measuring physical characteristics of the objects of the analyzed surface, and also increases reliability of the device.

All primary technical results listed above improve the resolution of the cantilever with a silicon needle when used as part of a scanning probe microscope, as well as make it possible to perform measurements having a metrological significance, while providing accurate numerical values of the measured parameters when scanning the analyzed surface according to all known modern procedures used in conjunction with scanning probe microscopes.

The fact that the single-crystal silicon console 2, the pedestal 5, and the pointed working part 4 all have same doping levels enables the uniform conductivity of the above components, which provides higher accuracy when measuring electrical characteristics of the objects of the analyzed surface.

The fact that the single-crystal silicon console 2 has a doping level, which is different from that of the pedestal 5 and the pointed working part 4, makes it possible to ensure the mobility of the charge carriers in the pointed working part 4 and the pedestal 5, which is different from that of the single-crystal silicon console 2. Indeed, as the doping level increases, so does the concentration of impurities, while the mobility of the charge carriers decreases due to increased scattering thereof by the impurity ions. The mobility of the charge carriers reaches its peak value when the concentration of impurities is low, although the conductivity drops, since the total quantity of the charge carriers also drops. When using the cantilever with a silicon needle in the scanning capacitance mode, it is necessary to apply a high frequency potential to the single-crystal silicon console 2. Such potential is required for the excitation of mechanical oscillations of the single-crystal silicon console 2. The mathematical model for calculating the capacitive force of the interaction between the cantilever and the surface of the sample depends on the overall geometry of the cantilever, as well as on the conductivity of its components, and the mobility of charge carriers therein. Different mobility of the charge carriers along with different conductivities of the single-crystal silicon console 2, the pedestal 5, and the pointed working part 4 allow for their inclusion into the mathematical model as separate components. As a result, it becomes possible to simplify the mathematical model for calculating the capacitive force of the above interaction. The second derivative of the interaction force, which only depends on the cantilever-sample capacitance and the size of the cantilever-sample gap, carries information about the distribution of the surface capacitance over the sample. The simplification of the mathematical calculation model, in turn, leads to an increase in measurement accuracy and unambiguous interpretation of the obtained values.

The fact that the doping level of the single-crystal silicon console 2 and the pedestal 5 is different from that of the pointed working part 4, same as mentioned above, makes it possible to simplify the model for calculating the capacitive force of the interaction between the cantilever and analyzed surface. In the mathematical model for calculating the capacitive force of such interaction, the single-crystal silicon console 2 and the pedestal 5 can be included separately from the pointed working part 4.

The simplification of the mathematical calculation model, in turn, leads to an increase in measurement accuracy and unambiguous interpretation of the obtained values.

The fact that the single-crystal silicon console 2, the pedestal 5, and the pointed working part 4 all have different doping levels, same as mentioned above, makes it possible to simplify the model for calculating the capacitive force of the interaction between the cantilever and the analyzed surface by including the single-crystal silicon console 2, the pedestal 5, and the pointed working part 4 into the interaction model as separate components.

The simplification of the mathematical calculation model, in turn, leads to an increase in measurement accuracy and unambiguous interpretation of the obtained values.

The fact that the single-crystal silicon console 2, the pedestal 5, and pointed working part 4 form a p-n transition in the areas with different doping levels makes it possible to have a fixed value of the voltage drop at the p-n junction when scanning the analyzed surface, while supplying the potential thereto through the cantilever, provided that the temperature is stable and the polarity of the potential allows for the p-n junction to be open. Indeed, it is known that when supplying a potential to a p-n junction, at which such p-n junction remains open, a voltage drop occurs at the p-n junction, which depends on the physical properties of such p-n junction. For example, the Schottky diode voltage drop is of the order of 0.2 V, and the p-n junction voltage drop in the silicon diode is of the order of 0.6 V. This phenomenon allows for a voltage difference to be of a known value, localized directly in the vicinity of the needle 3, which does not depend on the resistance of the entire cantilever, including the single-crystal silicon console 2, which may have different length and thickness, and thereby, different electrical resistance. Having a constant localized voltage difference in the vicinity of the needle 3 makes it possible to increase the measurement accuracy of the analyzed surface during electrical measurements requiring reference voltage sources.

The fact that the pedestal 5 is embodied with the periodic corrugated side surface 6 makes it possible to scatter the light incident onto the corrugated surface, thereby reducing the parasitic illuminations of the SPM optical information retrieval system, which in turn increases the signal-to-noise ratio when generating a signal while scanning the analyzed surface, which improves the measurement accuracy.

The fact that the periodic corrugated surface 6 of the pedestal 5 consists of cone-shaped members 7 also makes it possible to re-reflect the light incident onto the cone-shaped members in a different direction from the SPM optical information retrieval system, thereby reducing the parasitic illuminations of the optical information retrieval system of the scanning probe microscope, which in turn increases the signal-to-noise ratio when generating a signal while scanning the analyzed surface, which improves the measurement accuracy.

The fact that the angle A between the pedestal 5 and the plane of the single-crystal silicon console 2 is not equal to 90° makes it possible to orient the needle 3 perpendicular to the analyzed surface. Indeed, in the design of the majority of SPMs, the cantilever is oriented at a certain angle of inclination of the single-crystal silicon console 2 relative to the analyzed surface. If the needle 3 is oriented relative to the console at a 90° angle, it will scan the analyzed surface also at an angle, thus leading to geometrical distortions of the resulting SPM image. If angle A of the needle inclination is not equal to 90° and the needle is oriented perpendicular to the analyzed surface, the measurement accuracy of the analyzed surface will be improved.

The fact that the single-crystal silicon console 2 has a protrusion-compensator 8 at the point of its connection to the base 1 makes it possible to have a more fixed length of the single-crystal silicon console 2, which in turn allows for the fixed resonance characteristics of the console, which in turn improves the measurement accuracy.

The fact that the pedestal 5 has a circular shape in the cross-section parallel to the plane of the single-crystal silicon console makes it possible to know the introduced distortions ahead of time, when scanning the analyzed surface with deep profiles. Indeed, the needle 3 is oriented in the SPM at an angle to the analyzed surface. Therefore, when analyzing the surface with deep profiles, the needle 3 will interact mechanically with the surface relief pattern using both the pointed working part 4 and pedestal 5. The introduced distortions that occur when the pedestal 5 interacts with the analyzed relief pattern result from the interaction between the relief pattern and the cylindrical surface of the pedestal 5. This type of astigmatism can be easily taken into account in the mathematical model during the reconstruction of the measured relief pattern in the probe microscope, which improves the measurement accuracy.

The fact that the pedestal 5 has a polyhedral shape in the cross-section parallel to the plane of the single-crystal silicon console allows for the formation of mechanical stiffeners created by the faces of the pedestal 5, which provides the pedestal with mechanical strength in the case of a high aspect ratio of the pedestal length of its cross-sectional area, and prevents the needle 3 from bending as a result of mechanical interaction with the surface, which in turn improves the measurement accuracy.

The fact that the area of the pedestal 5 cross-section parallel to the plane of the single-crystal silicon console 2, in the zone of pedestal connection to the pointed working part 4 of the silicon needle 3, is equal to the cross-sectional area of the base of the pointed working part 4 makes it possible for the needle 3 to introduce minimal distortions into the SPM-formed image when scanning the analyzed surface with deep profiles, which improves the measurement accuracy.

The fact that the area of the pedestal 5 cross-section C1-C2 parallel to the plane of the single-crystal silicon console 2, in the zone of pedestal connection to the pointed working part 4 of the silicon needle 3, is greater than the area of cross-section D1-D2 of the pointed working part 4 in the zone of its connection to the pedestal 5 makes it possible to form a surface in the zone of connection between the needle and the pedestal, which is created by the difference in the area of the pedestal 5 and the area of the pointed working part 4. This surface allows for increasing the electrical capacity between the needle 3 and the analyzed surface, which in turn increases the force required to excite the oscillations of the single-crystal silicon console 2 by applying an appropriate potential to the cantilever, which is necessary in the Kelvin Probe technique, which is used to measure the contact voltage difference between the probe and the sample. This design increases the sensitivity of the Kelvin Probe technique, which in turn improves the measurement accuracy.

The fact that the area of the pedestal 5 cross-section E1-E2 parallel to the plane of the single-crystal silicon console 2, in the area of pedestal connection to the pointed working part 4 of the silicon needle 3, is smaller than the area of cross-section F1-F2 of the pointed working part 4 in the widest section thereof makes it possible to reduce the possibility of the pedestal touching the measured relief pattern when scanning the surface with deep profiles, which in turn reduces distortions caused by such touching and improves the measurement accuracy.

The fact that the silicon needle 3 is coated with the plasmonic active coating 11 makes it possible to obtain a higher amplification of the Raman signal from the analyzed surface due to the fact that the geometry of the needle 3, having a high length-to-pedestal cross-section ratio, provides an extended uniform section of the plasmonic active coating, which allows for the creation of the conditions to maximize the plasmonic amplification of the Raman signal, which improves the measurement accuracy.

The fact that the single-crystal silicon console 2 and silicon needle 3 are coated with the conductive coating 12 makes it possible to perform electrical measurements by taking into account the linear voltage drop across the conductive coating applied to the silicon needle 3 and the single-crystal silicon console 2 due to the fact that the conductive coating applied to the pedestal 5 has an extended constant cross-section mimicking the shape of the pedestal 5. In turn, the single-crystal silicon console 2 also has a rectangular geometric shape, which also provides a linear voltage drop across the conductive coating applied to the single-crystal silicon console 2. The size of the pointed working part 4 itself is extremely small compared to the single-crystal silicon console 2 and the pedestal 5, which introduces small changes to the linearity of all components of the conductive coating. Thus, the entire structure coated with the conductive coating makes it possible to supply the voltage to the measured surface through the conductive coating, the voltage drop across which has a linear dependence on all of its sections, which in turn improves the measurement accuracy.

The fact that the single-crystal silicon console 2 and the silicon needle 3 are coated with the magnetic sensitive coating 13 makes it possible to localize the interaction between the measured surface and the magnetic coating due to the fact that the silicon needle 3 has a high aspect (length-to-transverse size) ratio, and in fact, only the magnetic sensitive coating applied to the pointed working part 4 interacts with the analyzed surface, which improves the measurement accuracy.

The fact that the pedestal 5 has a tetrahedral shape in the cross-section parallel to the plane of the single-crystal silicon console 2, and the pedestal faces are oriented at angles B1 and B2 relative to the opposite ends 14 of the single-crystal silicon console 2 ensures the maximum strength of the pedestal 5 structure when scanning surfaces, having periodic extended structures, by orienting the faces of the pedestal 5 relative to the direction of scanning in such a way that the periodical structures on the analyzed surface become oriented at 45° relative to the faces of the pedestal 5, which provides for high measurement accuracy.

The fact that the pedestal 5 has an octahedral shape in the cross-section parallel to the plane of the single-crystal silicon console 2, and the pedestal faces are oriented at angles B3 and B4 relative to the opposite ends 14 of the single-crystal silicon console 2 makes it possible to orient the pedestal 5 relative to the excitatory laser radiation incident onto said pedestal 5 in a way that maximizes the excitation of the plasmonic active coating when using the cantilever in the procedures for measuring Raman signals from the molecules of the analyzed surface using plasmonic active coatings applied to the silicon needle 3, which improves the measurement accuracy.

The fact that the pedestal 5 is made of a sequence of at least the first member 15 and the second member 16 having different areas of cross-sections parallel to the plane of the single-crystal silicon console 2 makes it possible for masses of the members 15 and 16 to be different. Indeed, when the single-crystal silicon console 2 is excited at frequencies above 500 kHz, the masses of the members 15 and 16 of the silicon needle 3 displaced with respect to the axis of symmetry of the single-crystal silicon console 2 begin to affect the harmonic oscillation of the single-crystal silicon console. By adjusting the ratio of cross-sectional areas, and thereby the mass distribution of the members 15 and 16, it becomes possible to minimize the distortion of the harmonic oscillation of the console, which improves the measurement accuracy.

In conclusion, the applicant would like to note that scanning probe microscopy, which uses cantilevers, is a relatively new field of science and technology, the development of which has repeatedly called for the introduction of new terminology. For example, the term "cantilever" was not immediately included in the conventional terminology. For many years, the cantilever console was mistakenly called a "beam." The development of scanning probe microscopy will continue requiring the introduction of new terminology in the future as well. Therefore, the applicant would like to note that in the present invention, as described above and illustrated in Figures 1 through 19, a silicon needle 3 consisting of a pointed working part 4 and a pedestal 5 is mounted on the base 1. According to the applicant, such silicon needle 3 can be described by the term "complex-shaped silicon needle 3". In this case, a person skilled in nanotechnology and scanning probe microscopy, and in particular, a person skilled in cantilever art, can interpret the concept "complex form" of the silicon needle 3 as if the silicon needle 3 includes two components, namely, the pointed working part 4 and the pedestal 5, constituting a single body - the silicon needle 3 itself. In the applicant's opinion, such definition is appropriate, because it is consistent with the definition of the term "complex" (from the Latin "Complexus," which means "connection" or "combination") as "a combination of objects or phenomena constituting one whole" (see "Soviet Encyclopedic Dictionary," Editor-in-Chief: Academician A.M. Prokhorov, 3rd edition, "Sovetskaya Entsiklopediya," Moscow (1985), 1600 p.). In the applicant's opinion, the term "complex-shaped silicon needle 3" is accurate, since it represents a general term for all embodiments of the silicon needle 3 described above (and shown in Fig. 1-19) and describes a set of different components constituting one whole.

## Claims

1. A cantilever with a silicon needle, which comprises a base with a single-crystal silicon console mounted thereon and provided with a silicon needle, consisting of a pointed working part and a pedestal, having a length-to-transverse size ratio of at least two and no more than sixty, which is arranged on a single-crystal silicon console plane, **characterised in that** the single-crystal silicon console, the pedestal, and the pointed working part are all made of a single block of single-crystal silicon.

2. The cantilever according to claim 1, **characterised in that** the single-crystal silicon console, the pedestal, and the pointed working part all have same doping levels.

3. The cantilever according to claim 1, **characterised in that** the single-crystal silicon console has a different doping level compared to the pedestal and the pointed working part.

4. The cantilever according to claim 1, **characterised in that** the single-crystal silicon console and the pedestal have a different doping level compared to the pointed working part.

5. The cantilever according to claim 1, **characterised in that** the single-crystal silicon console, the pedestal, and the pointed working part have different levels of doping.

6. The cantilever according to claim 1, **characterised in that** the single-crystal silicon console, the pedestal, and the pointed working part form a p-n junction in the areas with different doping levels.

7. The cantilever according to claim 1, **characterised in that** the pedestal is made with a periodic corrugated side surface.

8. The cantilever according to claim 7, **characterised in that** the periodic corrugated pedestal surface consists of cone-shaped members.

9. The cantilever according to claim 1, **characterised in that** an angle A between the pedestal and a plane of the single-crystal silicon console is not equal to 90°.

10. The cantilever according to claim 1, **characterised in that** the single-crystal silicon console has a protrusion-compensator at a point of its connection to the base.

11. The cantilever according to claim 1, **characterised in that** the pedestal has a circular shape in a cross-section parallel to the plane of the single-crystal silicon console.

12. The cantilever according to claim 1, **characterised in that** the pedestal has a polyhedral shape in the cross-section parallel to the plane of the single-crystal silicon console.

13. The cantilever according to claim 1, **characterised in that** a cross-section B1-B2 of the pedestal, which is parallel to the plane of the single-crystal silicon console, has an area equal to the area of the cross-section B1-B2 of the base of the pointed working part in the zone where said cross-section is connected to the pointed working part of the silicon needle.

14. The cantilever according to claim 1, **characterised in that** a cross-section C1-C2 of the pedestal, which is parallel to the plane of the single-crystal silicon console, has a larger area in the zone of its connection to the pointed working part of the silicon needle compared to the area of a cross-section D1-D2 of the pointed working part in the zone of its connection to the pedestal.

15. The cantilever according to claim 1, **characterised in that** a cross-section E1-E2 of the pedestal, which is parallel to the plane of the single-crystal silicon console, has a smaller area in the zone of its connection to the pointed working part of the silicon needle compared to the area of a cross-section F1-F2 of the pointed working part in the widest section thereof.

16. The cantilever according to claim 1, **characterised in that** the silicon needle is coated with a plasmonic active coating.

17. The cantilever according to claim 1, **characterised in that** the single-crystal silicon console and the silicon needle are coated with a conductive coating.

18. The cantilever according to claim 1, **characterised in that** the single-crystal silicon console and the silicon needle are coated with a magnetically sensitive coating.

19. The cantilever according to claim 1, **characterised in that** the pedestal, in the cross-section parallel to the plane of the single-crystal silicon console, has a tetrahedral shape with its faces oriented at angles K1 and K2 relative to the opposite ends of the single-crystal silicon console.

20. The cantilever according to claim 1, **characterised in that** the pedestal, in the cross-section parallel to the plane of the single-crystal silicon console, has an octahedral shape with its faces oriented at angles K3 and K4 relative to the opposite ends of the single-crystal silicon console.

21. The cantilever according to claim 1, **characterised in that** the pedestal is made of at least a first member and a second member, having different areas of the cross-sections parallel to the plane of the single-crystal silicon console.
